(19) Europäisches Patentamt
European Patent Office
Office européen des brevets

(11) **EP 1 183 549 B1**

(12) **FASCICULE DE BREVET EUROPEEN**

(45) Date de publication et mention
de la délivrance du brevet:
**19.09.2007 Bulletin 2007/38**

(51) Int Cl.:
**G01S 7/497** $^{(2006.01)}$ **G01S 17/58** $^{(2006.01)}$
**G01P 5/00** $^{(2006.01)}$

(21) Numéro de dépôt: **00931313.1**

(22) Date de dépôt: **17.05.2000**

(86) Numéro de dépôt international:
**PCT/FR2000/001356**

(87) Numéro de publication internationale:
**WO 2000/073817 (07.12.2000 Gazette 2000/49)**

(54) **PROCEDE ET DISPOSITIF DE MESURE DE VITESSE PAR EFFET DOPPLER**

**VERFAHREN UND VORRICHTUNG ZUR DOPPLERGESCHWINDIGKEITSMESSUNG**

**METHOD AND DEVICE FOR MEASURING VELOCITY BY DOPPLER EFFECT**

(84) Etats contractants désignés:
**DE FR GB NL SE**

(30) Priorité: **27.05.1999 FR 9906822**

(43) Date de publication de la demande:
**06.03.2002 Bulletin 2002/10**

(73) Titulaire: **ONERA (Office National d'Etudes et de Recherches Aérospatiales)**
**92320 Châtillon (FR)**

(72) Inventeurs:
• **BARRICAU, Philippe**
**F-31620 Castelnau D'Estretefonds (FR)**
• **MIGNOSI, André**
**F-31500 Toulouse (FR)**
• **LEMPEREUR, Christine**
**F-31130 Balma (FR)**
• **MATHE, Jean-Michel**
**F-31450 Fourquevaux (FR)**

(74) Mandataire: **Cabinet Martinet & Lapoux**
**BP 405**
**78055 Saint Quentin Yvelines Cédex (FR)**

(56) Documents cités:
**EP-A- 0 506 657 WO-A-95/33999**
**US-A- 4 988 190**

• **MCKENZIE, ROBERT L.: "Planar Doppler Velocimetry Performance in Low-Speed Flows" AIAA 97-0498, 35TH AEROSPACE SCIENCES MEETING AND EXHIBIT, 6 - 10 janvier 1997, XP000879333 Reno, NV cité dans la demande**

**Description**

L'invention concerne un procédé et un dispositif de mesure de vitesse par effet Doppler, notamment pour la mesure d'un champ de vitesses dans un écoulement de fluide, mais également pour la mesure des vitesses de corps solides en mouvement tels que des projectiles ou des engins balistiques.

Il est déjà connu de déterminer les composantes de la vitesse d'un objet, éclairé par une nappe laser issue d'un faisceau, à partir d'une part de l'intensité de la lumière diffusée par cet objet et reçue directement par des photorécepteurs appropriés et d'autre part de l'intensité de cette lumière reçue par d'autres photorécepteurs appropriés à travers des moyens de filtrage spectral accordés sur la fréquence de la nappe laser d'éclairage (voir notamment les documents EP-0506657 et AIAA 97-0498, 35th Aerospace Sciences Meeting and Exhibit, Reno, NV, January 6-10, 1997, "Planar Doppler Velocimetry performance in low-speed flows" de R. L. McKenzie). Typiquement, la nappe laser d'éclairage est émise par un générateur laser à argon ou du type Nd-YAG associé à un doubleur de fréquence et fonctionnant par impulsions, les moyens de filtrage spectral comprennent une cuve à vapeur d'iode qui présente une raie d'absorption au voisinage de la fréquence laser d'éclairage et dont la transmission est d'environ 50% à cette fréquence, et les photorécepteurs sont du type matrice de CCD.

La fonction des moyens de filtrage spectral est de convertir les variations de fréquence, dues à l'effet Doppler, de la lumière diffusée par l'objet en variations d'intensité de la lumière captée par les photorécepteurs. Ainsi l'intensité de la lumière captée à travers les moyens de filtrage spectral varie en fonction de la vitesse du déplacement de l'objet. On effectue le rapport de l'intensité captée à travers les moyens de filtrage spectral et de l'intensité captée directement pour obtenir un signal normalisé qui varie en fonction du décalage Doppler et dont la connaissance permet de calculer la vitesse de l'objet selon une direction de l'espace.

Par ailleurs, une fraction du faisceau laser est prélevée et envoyée sur des photorécepteurs de la matrice de CCD, d'une part directement et d'autre part à travers les moyens de filtrage spectral, pour obtenir un signal normalisé (le rapport précité des intensités lumineuses reçues directement et à travers les moyens de filtrage spectral) qui correspond à une vitesse nulle et qui permet de compenser en permanence les variations de la fréquence laser dans le temps.

Ainsi, moyennant un étalonnage préalable de la fonction de transmission spectrale des moyens de filtrage précités, on détermine l'écart de fréquence dû à l'effet Doppler à partir du signal normalisé de la lumière diffusée par un objet en mouvement et du signal normalisé de vitesse nulle, et on calcule ensuite la vitesse de cet objet selon une direction de l'espace. Cette direction est définie par la direction de l'éclairage laser et par la direction d'observation. En effectuant les observations selon trois directions différentes, on obtient les trois composantes des vecteurs vitesse des objets en mouvement dans le champ d'observation.

La demande de brevet WO 95/33999 fournit des perfectionnements au dispositif de mesure de vitesse par effet Doppler selon la demande de brevet EP 0506657. La trame d'image de l'unique caméra CCD est divisée en deux zones de pixels pour recevoir respectivement des fractions de l'intensité de la lumière diffusée par un fluide directement et à travers les premiers moyens de filtrage spectral précités fonctionnant comme un convertisseur de fréquence en intensité. Un système de calibration, comportant des deuxièmes moyens de filtrage spectral avec une cuve à vapeur d'iode, analogues aux premiers moyens de filtrage spectral, traversés par une fraction de l'intensité de la lumière de la source laser, surveille les fluctuations de la fréquence et de l'intensité du faisceau laser d'éclairage en fonction de la température pour pré-calibrer les premiers moyens de filtrage spectral. Ces fluctuations sont prises en compte pour calculer la vitesse du fluide dans un dispositif de calcul de vitesse.

Toutefois, ces techniques connues ne prennent pas en compte les dérives de conversion des moyens de filtrage spectral en temps réel, notamment en fonction de la température, de sorte que la précision sur la mesure de vitesse s'avère insuffisante.

La présente invention a notamment pour but d'apporter une solution simple, efficace et peu coûteuse à ce problème.

Elle propose à cet effet un procédé de mesure de la vitesse d'au moins un objet par effet Doppler, comprenant :

- l'éclairage de l'objet par une nappe laser, issue d'un faisceau laser,
- la mesure de l'intensité de la lumière diffusée par l'objet, la mesure étant effectuée d'une part directement et d'autre part à travers des moyens de filtrage spectral accordés sensiblement sur la fréquence laser d'éclairage,
- la détermination d'un rapport desdites mesures pour l'obtention d'un signal normalisé de la lumière diffusée,
- la mesure de l'intensité d'une fraction du faisceau laser, d'une part directement et d'autre part à travers les moyens de filtrage spectral et la détermination d'un rapport de ces mesures pour l'obtention d'un signal normalisé correspondant à une vitesse nulle, et
- la détermination, à partir des signaux normalisés, d'une composante de la vitesse de l'objet dans une direction déterminée,

caractérisé en ce qu'il comprend également :

- la mesure de l'intensité d'un flux lumineux monochromatique de référence, d'une part directement et d'autre part à travers les moyens de filtrage spectral, ce flux de référence ayant une fréquence différant de celle du faisceau laser d'une valeur fixe connue,

- et la détermination d'un rapport des mesures d'intensité du flux de référence pour l'obtention d'un signal de référence normalisé correspondant à un écart de fréquence fixe et connu, donc à une vitesse non nulle et connue.

Ce signal de référence normalisé qui correspond à un écart de fréquence fixe connu, sert à recaler en temps réel la courbe de transmission des moyens de filtrage spectral, en compensant les dérives éventuelles de ces moyens.

L'écart de fréquence est avantageusement choisi pour couvrir une partie sensiblement linéaire de la courbe de transmission à partir du point correspondant à une vitesse nulle. Il devient alors possible de déterminer avec précision, par interpolation, la valeur du décalage Doppler qui correspond à un signal normalisé de la lumière diffusée par l'objet quand ce signal est compris entre le signal normalisé de vitesse nulle et le signal normalisé du flux de référence.

Avantageusement, ce procédé comprend la mesure des intensités, d'une part directement et d'autre part à travers les moyens de filtrage spectral, de plusieurs flux lumineux monochromatiques de référence dont les fréquences diffèrent de celles de l'éclairage laser de valeur fixes et connues différentes les unes des autres, et la détermination, pour chaque flux de référence, du rapport de ces mesures d'intensité pour l'obtention de signaux de référence normalisés correspondant à différents écarts de fréquence fixes et connus.

Ces différents écarts de fréquence sont avantageusement échelonnés sur une plus grande partie de la courbe de transmission des moyens de filtrage spectral, en particulier sur des zones non linéaires de cette courbe. Cela a par exemple pour effet de doubler la dynamique en fréquence, ce qui se traduit par une augmentation correspondante de la dynamique des vitesses mesurables.

Selon une autre caractéristique de ce procédé, le ou chaque flux de référence précité est émis dans un plan image intermédiaire des moyens optiques de formation d'une image de l'objet sur un ensemble de photodétecteurs. On évite ainsi de perturber le champ de vitesses à mesurer.

Avantageusement, le ou chaque flux de référence est émis par une source sensiblement ponctuelle.

On n'utilise ainsi qu'une très faible partie de l'image de ce champ pour l'acquisition des intensités des flux de référence.

L'invention propose également un dispositif de mesure de la vitesse d'au moins un objet par effet Doppler, comprenant

- des moyens d'éclairage de l'objet par une nappe issue d'un faisceau laser,
- des moyens optiques de formation d'une image de l'objet sur deux ensembles de photorécepteurs dont les signaux de sortie correspondent à l'intensité lumineuse reçue,
- des moyens de filtrage spectral accordés sensiblement sur la fréquence du faisceau laser et interposés entre lesdits moyens optiques et un ensemble de photorécepteurs,
- des moyens pour diriger directement et simultanément une fraction du faisceau laser sur une première partie de chacun des deux ensembles de photorécepteurs à travers les moyens optiques de formation d'image, pour l'obtention de signaux normalisés de la lumière diffusée par l'objet et de signaux normalisés correspondant à une vitesse nulle,

caractérisé en qu'il comprend également

- des moyens générant au moins un flux lumineux monochromatique de référence ayant une fréquence différant de celle du faisceau laser d'une valeur fixe connue, et
- des moyens pour diriger directement et simultanément ce flux de référence sur une deuxième partie de chacun des deux ensembles de photorécepteurs à travers les moyens optiques de formation d'image, pour obtenir un signal de référence normalisé correspondant à un écart de fréquence fixe et connu.

Avantageusement, le dispositif selon l'invention comprend des moyens générant plusieurs flux lumineux monochromatiques de référence ayant des fréquences différant de celle du faisceau laser par des valeurs fixes et connues différentes les unes des autres, ces flux de référence étant dirigés directement et simultanément sur des parties distinctes de chacun des deux ensembles de photorécepteurs à travers les moyens optiques de formation d'image, pour l'obtention de signaux de référence normalisés correspondant à des écarts de fréquence fixes et connus.

Dans un mode de réalisation préféré de l'invention, les moyens de génération du ou des flux de référence précités sont des moyens acousto-optiques tels en particulier qu'un dispositif de BRAGG.

Ces moyens produisent des flux de référence ayant des fréquences qui diffèrent de celle de l'éclairage laser par des valeurs égales à plus ou moins $n\Delta F$, $\Delta F$ étant un écart de fréquence fixe et connu, n étant un nombre entier supérieur à 0.

Ces écarts de fréquence sont avantageusement échelonnés de façon régulière sur la partie utile de la courbe de transmission spectrale des moyens de filtrage précités.

Selon d'autres caractéristiques de l'invention :

- les moyens de génération des flux lumineux de référence sont reliés par des fibres optiques aux moyens de formation d'image,

- les fibres optiques ont des extrémités situées sensiblement dans un plan image intermédiaire des moyens de formation d'image et orientées vers les photodétecteurs précités.

De façon générale, l'invention améliore la précision de la mesure de la vitesse d'un objet par effet Doppler et est applicable à la mesure d'un champ de vitesses en mécanique des fluides, ainsi qu'à des fins balistiques pour la mesure des vitesses de corps en mouvement, tels que des projectiles par exemple.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :

- la figure 1 est une vue schématique en perspective d'un dispositif de l'art antérieur ;
- la figure 2 est un schéma représentant la direction de la composante de vitesse déterminée en fonction de la direction d'éclairage et de la direction d'observation ;
- la figure 3 est une vue schématique de dessus représentant les composants essentiels du dispositif selon l'invention ;
- la figure 4 est un graphe représentant une partie de la courbe de transmission spectrale des moyens de filtrage utilisés dans le dispositif selon l'invention ;
- la figure 5 représente schématiquement des moyens de génération des flux de référence mis en oeuvre dans un dispositif selon l'invention.

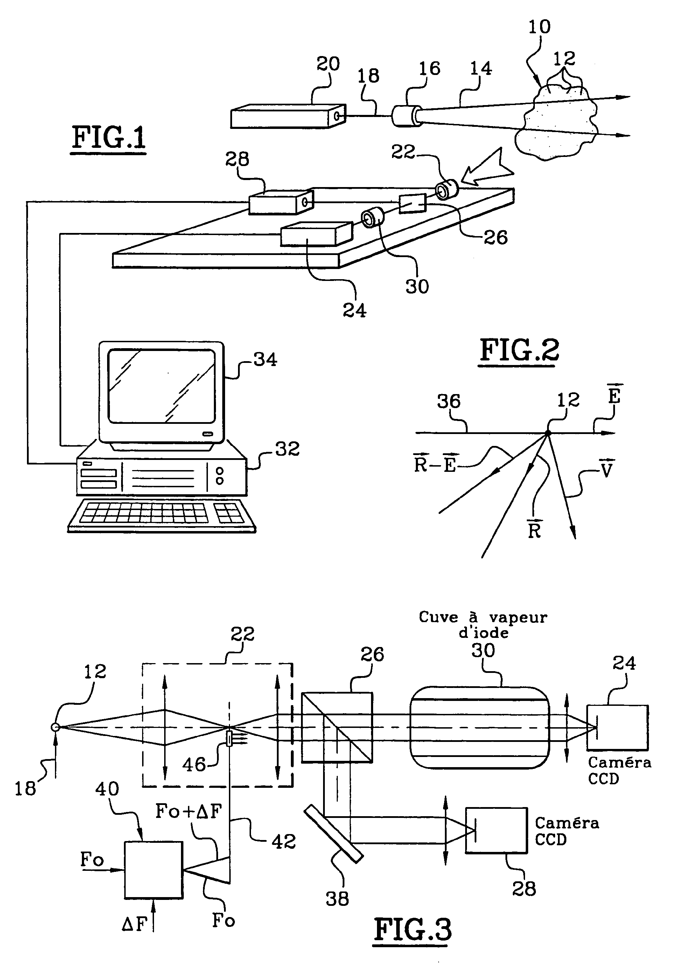

L'exemple de réalisation représenté aux figures 1 et 2, est appliqué à la détermination d'un champ de vitesses dans un écoulement de fluide 10, par mesure des décalages Doppler de la lumière diffusée par des particules 12 qui ont été injectées dans l'écoulement de fluide. Par exemple, et comme décrit dans les documents antérieurs précités, un écoulement de gaz peut être ensemencé avec un brouillard de très fines particules d'un liquide ou d'un solide approprié, qui sont dispersées dans l'écoulement de gaz et entraînées par celui-ci.

L'écoulement 10 est éclairé par une nappe laser 14 produite par des moyens appropriés 16 tels qu'une optique d'ouverture de faisceau (un ensemble de lentilles cylindriques et sphériques) ou un dispositif à polygone tournant, à partir du faisceau 18 émis par une source laser appropriée, telle qu'un laser à argon en fonctionnement mono-mode longitudinal, émettant à une longueur d'onde de 514,5nm, ou un laser YAG doublé à 532nm.

L'éclairage laser est diffusé par les particules 12 présentes dans l'écoulement 10. Des moyens de détection de la lumière diffusée par les particules 12 comprennent un système optique 22 de formation d'une image sur un ensemble de photodétecteurs tels qu'une caméra CCD 24 par exemple, le flux lumineux transmis par le système optique 22 passant par un séparateur de faisceau 26 qui dirige une fraction de ce flux vers un autre ensemble de photodétecteurs tels qu'une autre caméra CCD 28 par exemple, le flux lumineux transmis par le séparateur de faisceau 26 traversant des moyens de filtrage spectral 30 accordés sur la fréquence du faisceau laser 18, avant de parvenir jusqu'à la caméra CCD 24.

Par exemple, les moyens de filtrage 30 sont constitués d'une cuve à vapeur d'iode qui présente une raie d'absorption au voisinage de la fréquence du faisceau laser 18, la transmission étant par exemple d'environ 50% à cette fréquence.

Les caméras CCD 24 et 28 sont reliées en sortie à des moyens 32 de traitement de l'information, comprenant des moyens d'acquisition et de calcul et des moyens de visualisation 34 sur lesquels on peut afficher des images du champ observé, dans lesquelles les composantes des vitesses des particules dans une direction déterminée sont représentées par différentes nuances de gris ou par différentes couleurs.

En figure 2, $\vec{V}$ est le vecteur vitesse d'une particule 12 éclairée par un rayon laser incident 36 dont la direction de propagation est représentée par le vecteur unitaire $\vec{E}$ et $\vec{R}$ est le rayon unitaire de la direction d'observation ou direction reliant la particule 12 au centre de perspective de la prise de vue.

Le décalage Doppler de la lumière diffusée par la particule 12 par rapport à l'éclairage laser est donné par la formule :

$$\Delta f \;=\; \frac{Fo}{c}\;\;\vec{V}\,.\,(\,\vec{R}\,-\,\vec{E}\,)$$

où Fo est la fréquence de l'éclairage laser et c est la vitesse de la lumière dans le vide.

En figure 2, le vecteur $\vec{R}$-$\vec{E}$ représente la direction dans laquelle est mesurée la composante de la vitesse V de la particule par le dispositif de la figure 1.

La lumière diffusée par les particules 12 est captée par le système optique 22 et transmise pour partie à la première caméra CCD 24 après traversée des moyens de filtrage spectral 30 et pour partie à l'autre caméra CCD 28, éventuellement au moyen d'un miroir de renvoi 38 (figure 3). Les signaux de sortie des caméras 24 et 28 permettent de comparer, pixel à pixel, l'intensité de la lumière diffusée reçue directement par la caméra 28 à celle de la lumière diffusée reçue par la caméra 24 après traversée des moyens de filtrage spectral 30.

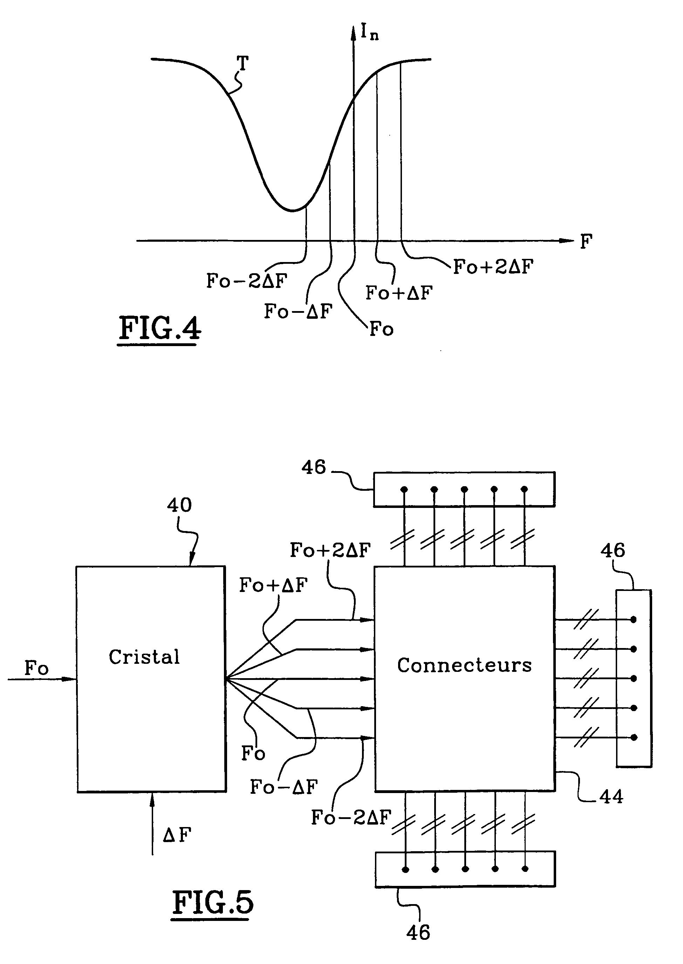

Comme on le voit sur la courbe de transmission spectrale C de la figure 4, ces moyens 30 sont accordés sur une fréquence voisine de la fréquence Fo du faisceau laser 18, la transmission étant d'environ 50% à la fréquence Fo. En fonction de la direction de déplacement des particules 12 par rapport au dispositif de mesure, la fréquence de la lumière diffusée par les particules peut être supérieure ou inférieure à la fréquence Fo et sa transmission par les moyens 30 sera supérieure ou inférieure respectivement à ce qu'elle serait pour la fréquence Fo.

Pour que les fluctuations de la fréquence Fo du faisceau laser 18 et les dérives, notamment thermiques, des moyens de filtrage 30 puissent être prises en compte et compensées automatiquement, l'invention prévoit des moyens 40 (figure 3) générant des flux monochromatiques de référence qui sont injectés dans le flux lumineux transmis par le système optique 22 et captés par les photodétecteurs des caméras CCD 24 et 28.

Les moyens 40 sont avantageusement du type acousto-optique et comprennent un cristal dans lequel un réseau de phase est induit par la propagation d'une onde acoustique générée par un cristal piézo-électrique aux bornes duquel est appliquée une tension sinusoïdale de fréquence $\Delta F$. Quand une onde lumineuse de fréquence Fo (une fraction du faisceau laser 18) se propage au sein de ce cristal, on obtient en sortie un faisceau à la fréquence Fo ainsi qu'un faisceau à la fréquence Fo + $\Delta F$ (fonctionnement de type BRAGG). Ces deux faisceaux peuvent être transmis par des fibres optiques 42 en deux points d'un plan image intermédiaire du système optique 22, les extrémités des fibres optiques 42 étant orientées dans ce plan en direction du cube séparateur 26. Ainsi, les signaux de sortie des caméras 24 et 28 fournissent des mesures des intensités des flux lumineux aux fréquences Fo et Fo + $\Delta F$ captés après traversée des moyens de filtrage 30 par la caméra 24 et captés directement par la caméra 28.

On dispose ainsi, sur la courbe de transmission spectrale de la figure 4, de deux points correspondant aux fréquences Fo et Fo + $\Delta F$, et cela quelles que soient les fluctuations de la fréquence Fo du faisceau laser 18, la valeur $\Delta F$ étant quant à elle fixe et connue.

On utilise les mesures d'intensité fournies par la caméra CCD 28 pour obtenir des signaux normalisés In qui sont égaux aux rapports (pixel à pixel) des intensités mesurées par la caméra 24 et des intensités mesurées par la caméra 28. De préférence et comme représenté schématiquement en figure 5, les moyens 40 de génération de flux lumineux de référence vont fonctionner en mode RAMAN-NATH pour fournir en sortie des faisceaux lumineux ayant les fréquences Fo, Fo + $\Delta F$, Fo - $\Delta F$, Fo + 2$\Delta F$ et Fo - 2$\Delta F$.

Ces faisceaux sont transmis par des fibres optiques et par un ensemble de connecteurs 44 à trois petits boîtiers 46 associés chacun à un dispositif de détection tel que celui représenté à la figure 3, pour la mesure des composantes des vitesses des particules 12 dans trois directions différentes, une seule source laser 20 de direction fixe étant alors utilisée.

Dans chaque boîtier 46, les extrémités des fibres optiques sont orientées vers les photorécepteurs et transmettent cinq flux lumineux de référence ayant les fréquences indiquées ci-dessus.

Cela permet d'utiliser une plus grande partie de la courbe de transmission spectrale des moyens 30, comprenant des parties non linéaires, en compensant automatiquement et en permanence les fluctuations de la fréquence laser d'éclairage et les dérives dans le temps des moyens 30 de filtrage spectral.

L'écart de fréquence $\Delta F$ précité peut être de 200MHz, ce qui permet alors de travailler sur une dynamique de fréquence de 1GHz autour de la fréquence laser Fo. La dynamique en vitesse mesurée dépend des conditions géométriques de visée. Dans le cas d'une configuration standard que l'on rencontre en soufflerie, on obtient une dynamique de vitesses qui passe par exemple de 350m/s (si on se limite à la partie linéaire de la courbe de transmission spectrale des moyens 30) à 700m/s, soit le double.

Typiquement, les moyens 30 de filtrage spectral sont constitués par une cuve à vapeur d'iode. Si la variation de température du doigt de cette cuve est de 0,5°C, cela entraîne une variation fréquentielle d'environ 5MHz. Les fluctuations fréquentielles de la source laser 20 peuvent être de l'ordre de 2MHz. Elles génèrent une incertitude d'environ 5m/s sur les vitesses mesurées (en configuration standard). L'invention permet de faire tendre cette incertitude vers zéro, en compensant automatiquement les dérives thermiques de la cuve à vapeur d'iode et les fluctuations fréquentielles de la source laser.

Les moyens 40 du type acousto-optique peuvent générer des décalages fréquentiels avec une précision relative de l'ordre de $10^{-6}$, c'est-à-dire avec une incertitude de 200Hz pour un écart de fréquence $\Delta F$ de 200MHz. L'erreur de mesure est alors liée à l'incertitude de la technique d'interpolation utilisée pour obtenir en temps réel la courbe d'étalonnage de la fonction de transmission spectrale de la cuve à vapeur d'iode ainsi qu'à l'incertitude liée à la mesure radiométrique des caméras 24 et 28, qui est estimée à 0,15% dans le cas de caméras à 10 bits vrais.

**Revendications**

1. - Procédé de mesure de la vitesse d'au moins un objet par effet Doppler, comprenant :

   - l'éclairage de l'objet (12) par une nappe laser (14), issue d'un faisceau laser,
   - la mesure de l'intensité de la lumière diffusée par l'objet (12), cette mesure étant effectuée d'une part directement et d'autre part à travers des moyens (30) de filtrage spectral accordés sensiblement sur la fréquence Fo de l'éclairage laser,
   - l'obtention d'un signal normalisé In, égal au rapport des mesures de l'intensité à travers les moyens de filtrage spectral et de l'intensité mesurée directement,
   - la mesure de l'intensité d'une fraction du faisceau laser, d'une part à travers les moyens de filtrage spectral (30) et d'autre part directement et la détermination du rapport de ces mesures d'intensités pour l'obtention d'un signal normalisé correspondant à une vitesse nulle, et
- la détermination à partir des signaux normalisés précités, d'une composante de la vitesse de l'objet (12) dans une direction déterminée,

**caractérisé en ce qu'**il comprend également :

- la mesure de l'intensité d'au moins un flux lumineux monochromatique de référence, cette intensité étant mesurée d'une part directement et d'autre part à travers les moyens de filtrage spectral (30), ce flux de référence ayant une fréquence différant de celle Fo du faisceau laser d'une valeur fixe connue $\Delta F$,
- et la détermination du rapport des mesures d'intensités du flux de référence pour l'obtention d'un signal de référence normalisé correspondant à un écart de fréquence $\Delta F$ fixe et connu.

**2.** - Procédé selon la revendication 1, **caractérisé en ce qu'**il comprend la mesure des intensités, directement et à travers les moyens de filtrage spectral, de plusieurs flux lumineux monochromatiques de référence dont les fréquences diffèrent de celle Fo du faisceau laser de valeurs fixes et connues différentes les unes des autres et la détermination, pour chaque flux de référence, du rapport desdites mesures d'intensités pour l'obtention de signaux de référence normalisés correspondant à différents écarts de fréquence fixes et connus.

**3.** - Procédé selon la revendication 1 ou 2, **caractérisé en ce que** le ou chaque flux de référence est généré à partir du faisceau laser par décalage de la fréquence de ce faisceau.

**4.** - Procédé selon l'une des revendications 1 à 3, **caractérisé en ce que** le ou chaque flux de référence est émis dans un plan image intermédiaire de moyens optiques (22) de formation d'une image de l'objet (12) sur chaque ensemble de photodétecteurs (24, 28).

**5.** - Procédé selon l'une des revendications 1 à 4, **caractérisé en ce que** le ou chaque flux de référence est émis par une source sensiblement ponctuelle.

**6.** - Dispositif de mesure de la vitesse d'au moins un objet par effet Doppler, comprenant :

- des moyens (20, 16) d'éclairage de l'objet par une nappe laser (14) issue d'un faisceau laser,
- des moyens optiques (22) de formation d'une image de l'objet (12) sur deux ensembles de photorécepteurs (24, 28) dont les signaux de sortie correspondent à l'intensité lumineuse reçue,
- des moyens de filtrage spectral (30) accordés sensiblement sur la fréquence Fo du faisceau laser et interposés entre lesdits moyens optiques (22) et un ensemble (24) de photorécepteurs précités,
- des moyens (40, 42) pour diriger directement et simultanément une fraction du faisceau laser sur une première partie de chacun des deux ensembles de photorécepteurs précités à travers les moyens optiques (22) de formation d'image,
- et des moyens (32) de détermination du rapport des mesures d'intensités de la lumière diffusée par l'objet (12) et du rapport des mesures d'intensités de ladite fraction de l'éclairage laser, pour l'obtention de signaux normalisés,

**caractérisé en ce qu'**il comprend également :

- des moyens (40) générant au moins un flux lumineux monochromatique de référence ayant une fréquence différant de celle Fo du faisceau laser d'une valeur fixe connue $\Delta F$,
- et des moyens (42) introduisant ce flux de référence dans les moyens optiques précités (22) de formation d'image et le dirigeant sur une deuxième partie de chacun des deux ensembles de photorécepteurs précités, d'une part directement et d'autre part à travers les moyens de filtrage spectral (30), pour l'obtention d'un signal de référence normalisé correspondant à un écart de fréquence $\Delta F$ fixe et connu.

**7.** - Dispositif selon la revendication 6, **caractérisé en ce qu'**il comprend des moyens (40) générant plusieurs flux lumineux monochromatiques de référence dont les fréquences diffèrent de celle du faisceau laser par des valeurs fixes et connues différentes les unes des autres, et des moyens (46) pour diriger ces flux de référence sur des parties distinctes de chacun des deux ensembles de photodétecteurs précités.

**8.** - Dispositif selon la revendication 6 ou 7, **caractérisé en ce que** les moyens (40) de génération du ou des flux de référence sont des moyens acousto-optiques tels qu'un dispositif de BRAGG.

**9.** - Dispositif selon la revendication 7 ou 8, **caractérisé en que** les moyens (40) générant les flux de référence précités produisent des flux de référence dont les fréquences sont respectivement Fo + $n\Delta F$ et Fo - $n\Delta F$, Fo étant la fréquence de l'éclairage laser, $\Delta F$ étant un écart de fréquence fixe et connu, n étant un nombre entier supérieur à 0 et prenant les valeurs 1, 2,....

**10.** - Dispositif selon l'une des revendications 6 à 9, **ca-**

**ractérisé en ce que** les moyens (40) de génération des flux de référence sont reliés par des fibres optiques (42) aux moyens (22) de formation d'image, chaque fibre optique ayant une extrémité située sensiblement dans un plan image intermédiaire des moyens (22) de formation d'image et orientée vers les photodétecteurs précités.

## Claims

1. A method of measuring the speed of at least one object by the Doppler effect, including:

   - illuminating the object (12) with a laser sheet derived from a laser beam,
   - measuring the intensity of the light diffused by the object (12), on the one hand directly and on the other hand via spectral filter means (30) substantially tuned to the frequency Fo of the laser illumination,
   - obtaining a normalized signal In equal to the ratio of the intensity measured via the spectral filter means and the intensity directly measured,
   - measuring the intensity of a portion of the laser beam, on the one hand via the spectral filter means (30) and on the other hand directly, and determining the ratio of these measured intensities to obtain a normalized signal corresponding to a zero speed, and
   - determining from the above normalized signals a component of the speed of the object (12) in a particular direction,

   **characterized in that** it further includes:

   - measuring the intensity of at least one reference monochromatic luminous flux, said intensity being measured on the one hand directly and on the other hand via the spectral filter means (30), said reference flux having a frequency differing from that Fo of the laser beam by a known fixed amount $\Delta F$,
   - and determining the ratio of the measured intensities of the reference flux to obtain a normalized reference signal corresponding to a fixed and known frequency difference $\Delta F$.

2. The method according to claim 1, **characterized in that** it includes measuring the intensities, directly and via the spectral filter means, of a plurality of reference monochromatic luminous fluxes whose frequencies differ from that Fo of the laser beam by fixed and known amounts different from one to another and determining, for each reference flux, the ratio between said measured intensities to obtain normalized reference signals corresponding to different fixed and known frequency differences.

3. The method according to claim 1 or 2, **characterized in that** the or each reference flux is derived from the laser beam by shifting the frequency of said beam.

4. The method according to one of claims 1 to 3, **characterized in that** the or each reference flux is emitted in an intermediate image plane of optical means (22) for forming an image of the object (12) on each set of photodetectors (24, 28).

5. The method according to one of claims 1 to 4, **characterized in that** the or each reference flux is emitted by a substantially point source.

6. A device for measuring a speed of at least one object by the Doppler effect, including:

   - means (20, 16) for illuminating the object with a laser sheet derived from a laser beam,
   - optical means (22) for forming an image of the object (12) on two sets of photoreceptors (24, 28) whose output signals correspond to the received luminous intensity,
   - spectral filter means (30) substantially tuned to the frequency of the laser beam and disposed between said optical means (22) and one set of said two sets of photoreceptors,
   - means (40, 42) for directly and simultaneously directing a portion of the laser beam onto a first portion of each of said two sets of photoreceptors via the image forming optical means (22),
   - and means (32) for determining the ratio of the measured intensities of the light diffused by the object (12) and the ratio of the measured intensities of said portion of the laser illumination to obtain normalized signals,

   **characterized in that** it further includes:

   - means (40) for generating at least one reference monochromatic luminous flux having a frequency different from that Fo of the laser beam by a known fixed amount $\Delta F$,
   - and means (42) for introducing said reference flux into said image forming optical means (22) and directing it onto a second portion of each of said two sets of photoreceptors, on the one hand directly and on the other hand via the spectral filter means (30), to obtain a normalized reference signal corresponding to a fixed and known frequency difference $\Delta F$.

7. The device according to claim 6, **characterized in that** it includes means (40) for generating a plurality of reference monochromatic luminous fluxes whose frequencies differ from that of the laser beam by fixed and known amounts different from one to another, and means (46) for directing said reference fluxes onto separate portions of each of said two sets of photodetectors.

8. The device according to claim 6 or 7, **characterized in that** the means for generating the reference flux or fluxes are acoustical-optical means such as a BRAGG device.

9. The device claimed in claim 7 or 8, **characterized in that** the means (40) for generating said reference fluxes generate reference fluxes whose frequencies are respectively Fo + nΔF and Fo - nΔF, Fo being the frequency of the laser illumination, ΔF being a fixed and known frequency difference, n being an integer greater than zero and taking the values 1, 2,....

10. The device claimed in one of claims 6 to 9, **characterized in that** the means (40) for generating the references fluxes are connected by optical fibers (42) to the image forming means (22), each optical fiber having one end substantially located in an intermediate image plane of the image forming means (22) and oriented toward said photodetectors.

**Patentansprüche**

1. Verfahren zur Messung der Geschwindigkeit mindestens eines Objektes durch den Doppler-Effekt, umfassend:

   - die Beleuchtung des Objektes (12) durch eine Laserebene (14), die aus einem Laserstrahl hervorgegangen ist,
   - die Messung der Intensität des vom Objekt (12) gestreuten Lichtes, wobei diese Messung einerseits direkt erfolgt und andererseits über Spektralfiltermittel (30), die im Wesentlichen auf die Frequenz $F_0$ der Laserbeleuchtung abgestimmt sind,
   - Erzeugung eines normalisierten Signals In, das dem Verhältnis der Messungen der Intensität durch die Spektralfiltermittel zur direkt gemessenen Intensität gleich ist,
   - Messung der Intensität eines Teils des Laserstrahls, einerseits durch die Spektralfiltermittel (30) und andererseits direkt, und Bestimmung des Verhältnisses dieser Intensitätsmessungen, um ein normalisiertes Signal zu erhalten, das einer Geschwindigkeit gleich Null entspricht, und
   - Bestimmung einer Komponente der Geschwindigkeit des Objektes (12) in einer bestimmten Richtung aus den genannten normalisierten Signalen,

   **dadurch gekennzeichnet, dass** es ebenfalls umfasst:

   - die Messung der Intensität mindestens eines monochromatischen Bezugslichtstromes, wobei diese Intensität einerseits direkt gemessen wird und andererseits durch die Spektralfiltermittel (30), wobei dieser Bezugslichtstrom über eine um einen bekannten festen Wert ΔF andere Frequenz verfügt, als der $F_0$ des Laserstrahls,
   - und die Bestimmung des Verhältnisses der Intensitätsmessungen des Bezugsstromes zur Erzeugung eines normalisierten Bezugssignals, das einer festen und bekannten Frequenzabweichung ΔF entspricht.

2. Verfahren nach Patentanspruch 1, **dadurch gekennzeichnet, dass** es die Messung der Intensitäten mehrerer monochromatischer Bezugslichtströme direkt und durch die Spektralfiltermittel umfasst, deren Frequenzen sich von der $F_0$ des Laserstrahls um feste und bekannte Beträge unterscheiden, die voneinander verschieden sind, und die Bestimmung des Verhältnisses der genannten Intensitätsmessungen für jeden Bezugsstrom zur Erzeugung normalisierter Bezugssignale, die verschiedenen festen und bekannten Frequenzabweichungen entsprechen.

3. Verfahren nach Patentanspruch 1 oder 2, **dadurch gekennzeichnet, dass** der oder jeder Bezugsstrom aus dem Laserstrahl durch Verschieben der Frequenz dieses Strahls erzeugt wurde.

4. Verfahren nach einem der Patentansprüche 1 bis 3, **dadurch gekennzeichnet, dass** der oder jeder Bezugsstrom in eine Zwischenbildebene optischer Mittel (22) zur Erzeugung eines Bildes des Objektes (12) auf jeder Photodetektoreinheit (24, 28) gesandt wird.

5. Verfahren nach einem der Patentansprüche 1 bis 4, **dadurch gekennzeichnet, dass** der oder jeder Bezugsstrom von einer im Wesentlichen punktförmigen Quelle ausgesendet wird.

6. Vorrichtung zur Messung der Geschwindigkeit mindestens eines Objektes durch den Doppler-Effekt, umfassend:

   - Mittel (20, 16) zur Beleuchtung des Objektes durch eine Laserebene (14), die aus einem Laserstrahl hervorgegangen ist,
   - optische Mittel (22) zur Erzeugung eines Bildes des Objektes (12) auf zwei Photorezeptoreinheiten (24, 28), deren Ausgangssignale der empfangenen Lichtintensität entsprechen,
   - Spektralfiltermittel (30), die im Wesentlichen auf die Frequenz $F_0$ des Laserstrahls abge-

stimmt und zwischen die genannten optischen Mittel (22) und eine oben genannte Photorezeptoreinheit (24) eingefügt sind,

- Mittel (40, 42) zur direkten und gleichzeitigen Leitung eines Teils des Laserstrahls auf einen ersten Teil jeder der beiden genannten Photorezeptoreinheiten durch die optischen Bilderzeugungsmittel (22),

- und Mittel (32) zur Bestimmung des Verhältnisses der Intensitätsmessungen des vom Objekt (12) gestreuten Lichtes und des Verhältnisses der Intensitätsmessungen des genannten Teils der Laserbeleuchtung, um normalisierte Signale zu erhalten,

**dadurch gekennzeichnet, dass** sie außerdem umfasst:

- Mittel (40) zur Erzeugung mindestens eines monochromatischen Bezugslichtstromes, der über eine um einen bekannten festen Wert $\Delta F$ andere Frequenz verfügt, als der $F_0$ des Laserstrahls,

- und Mittel (42), die diesen Bezugsstrom in die oben genannten optischen Mittel (22) zur Bilderzeugung lenken und ihn auf einen zweiten Teil jeder der beiden oben genannten Photorezeptoreinheiten richten, einerseits direkt und andererseits durch die Spektralfiltermittel (30) zur Erzeugung eines normalisierten Bezugssignal, das einer festen und bekannten Frequenzabweichung $\Delta F$ entspricht.

**7.** Vorrichtung nach Patentanspruch 6, **dadurch gekennzeichnet, dass** sie Mittel (40) umfasst, die mehrere monochromatische Bezugslichtströme erzeugen, deren Frequenzen sich um feste bekannte, untereinander verschiedene Beträge von der Frequenz des Laserstrahls unterscheiden, und Mittel (46), um diese Bezugsströme auf unterschiedliche Teile jeder der beiden oben genannten Photodetektoreinheiten zu lenken.

**8.** Vorrichtung nach Patentanspruch 6 oder 7, **dadurch gekennzeichnet, dass** die Mittel (40) zur Erzeugung des oder der Bezugslichtstromes/ströme akusto-optische Mittel sind, etwa eine Vorrichtung nach BRAGG.

**9.** Vorrichtung nach Patentanspruch 7 oder 8, **dadurch gekennzeichnet, dass** die Mittel (40) zur Erzeugung der genannten Bezugslichtströme Bezugslichtströme erzeugen, deren Frequenzen jeweils $F_0 + n\Delta F$ und $F_0 - n\Delta F$ sind, worin $F_0$ die Frequenz der Laserbeleuchtung ist, $\Delta F$ eine feste und bekannte Frequenzabweichung, n eine ganze Zahl größer 0, die die Werte 1, 2, ... annimmt.

**10.** Vorrichtung nach einem der Patentansprüche 6 bis 9, **dadurch gekennzeichnet, dass** die Mittel (40) zur Erzeugung der Bezugslichtströme durch Lichtleitfasern (42) mit den Bilderzeugungsmitteln (22) verbunden sind, wobei jede optische Faser über ein Ende verfügt, das im Wesentlichen in einer Zwischenbildebene der Bilderzeugungsmittel (22) liegt und auf die oben genannten Photodetektoren gerichtet ist.

EP 1 183 549 B1

**FIG.1**

**FIG.2**

**FIG.3**

Cuve à vapeur d'iode

Caméra CCD

Caméra CCD

$F_o + \Delta F$

$F_o$

$\Delta F$

$F_o$

10

$I_n$

T

$F_o-2\Delta F$

$F_o-\Delta F$

$F_o$

$F_o+\Delta F$

$F_o+2\Delta F$

F

## FIG.4

46

40

$F_o+2\Delta F$

$F_o+\Delta F$

$F_o$

Cristal

$F_o$

$\Delta F$

$F_o-\Delta F$

$F_o-2\Delta F$

Connecteurs

46

44

46

## FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0506657 A

- WO 9533999 A

**Littérature non-brevet citée dans la description**

- **R. L. MCKENZIE.** Planar Doppler Velocimetry performance in low-speed flows. *35th Aerospace Sciences Meeting and Exhibit*